# EUROPÄISCHE PATENTANMELDUNG

(11) **EP 1 225 011 A1**
(43) Veröffentlichungstag der Anmeldung: **24.07.2002**
(21) Anmeldenummer: 01128977.4
(22) Anmeldetag: 06.12.2001
(51) Int. Cl.: B25J 19/00, F16L 57/00

(54) **Verschleissring**

(30) Priorität: 19.01.2001 DE 20100947 U
(71) Anmelder: KUKA Roboter GmbH, 86165 Augsburg (DE)
(72) Erfinder: Berninger, Alwin, 86159 Augsburg (DE); Karlinger, Stefan, 86199 Augsburg (DE)
(74) Vertreter: Lempert, Jost, Dipl.-Phys. Dr. rer.nat.

(57) **Zusammenfassung**

Ein Verschleißring (16), insbesondere zum Schutz eines Kabelführungsschlauchs (11) an einem Roboter (1), mit einem jeweils zwei Halbschalen (22a,22b,23a,23b) aufweisenden Innenring (20) und Außenring (21) ist dadurch gekennzeichnet, daß die Halbschalen (22a,22b,23a,23b) wenigstens eines der Ringe miteinander verrastbar sind.

## Beschreibung

Die Erfindung betrifft einen Verschleißring, insbesondere zum Schutz eines Kabelführungsschlauchs an einem Roboter, mit einem jeweils zwei Halbschalen aufweisenden Innenring und Außenring sowie einen mit einem Kabelführungsschlauch mit wenigstens einem solchen Verschleißring ausgestatteten Roboter.

Kabelführungs- oder Schutzschläuche kommen vornehmlich bei Maschinen, insbesondere bei Robotern mit mehreren relativ zueinander verschwenkbaren Teilen zum Einsatz, um elektrische Kabel zur Stromversorgung des Roboters oder eines in einer Roboterhand angeordneten Werkzeugs außenseitig des Roboters zu führen. Während des Betriebs kommt es zu Distanzänderungen zwischen einzelnen Punkten des Roboters, so dass der Kabelführungsschlauch insbesondere dort, wo bewegte Roboterteile, wie eine Schwinge, ein Roboterarm oder eine Roboterhand, sich berühren können, einer mechanischen Abnutzung ausgesetzt ist und die Gefahr eines Abscheuerns besteht. Um Beschädigungen des Schlauchs durch Scheuern zu vermeiden, ist es bekannt, an solchen kritischen Stellen des Kabelführungsschlauchs Verschleißringe anzuordnen, welche ihrerseits abgescheuert und hernach ausgetauscht werden.

Die Verschleißringe bestehen in der Regel aus zwei Halbschalen, die mittels Senkschrauben miteinander verbunden sind. Wenn sich der Verschleißring im Bereich der Schraubenbefestigung abscheuert, so treten die versenkten Köpfe der Schraube hervor und können dann Maschinen- oder Roboterteile, an denen die Verschleißringe und damit die hervortretenden Schraubköpfe entlangscheuern, beschädigen.

Die DE 298 14 418 U1 beschreibt einen Verschleißring gemäß dem Oberbegriff des Anspruchs 1, wobei die Halbschalen des Innenrings entweder fest oder reibschlüssig mit den Halbschalen des Außenrings verbunden sind. Außen- und Innenring weisen unterschiedliche Farben auf, so dass nach Abnutzung des Außenrings die Farbe des Innenrings erkennbar und derart ein erforderlicher Austausch des Verschleißrings angezeigt wird. Zum Verbinden der Halbschalen sind Kunststoffschrauben vorgesehen, die in eine an der der ersten Halbschale des Verschleißrings zugewandten Stirnseite der zweiten Halbschale angeordnete Gewindebohrung eingreifen. Zum Anbringen der Schraube weist die erste Halbschale eine sie durchsetzende, mit der Gewindebohrung der zweiten Halbschale fluchtende Bohrung auf.

Nachteilig ist einerseits die relativ aufwendige und teure Fertigung der Gewindebohrung, z. B. durch ein die Gewindebohrung aufweisendes, in die jeweilige Halbschale eingespritztes Zusatzteil, andererseits erfordert die Montage und Demontage des Verschleißrings an den bzw. von dem Kabelführungsschlauch den Einsatz von speziellen Werkzeugen.

Der Erfindung liegt die Aufgabe zugrunde, einen Verschleißring der eingangs genannten Art dahingehend weiterzubilden, dass er kostengünstiger herstellbar und insbesondere einfacher schneller montierbar bzw. demontierbar ist.

Erfindungsgemäß wird diese Aufgabe bei einem Verschleißring der eingangs genannten Art dadurch gelöst, dass die Halbschalen wenigstens eines der Ringe miteinander verrastbar sind.

Durch die erfindungsgemäße Ausgestaltung ist einerseits eine einfache und preiswerte einstückige Fertigung der Halbschalen in einem einzigen Vorgang - im Falle eines Verschleißrings aus Kunststoff insbesondere durch Spritzen - möglich. Andererseits erfordert die Montage des Verschleißrings an einem Kabelführungsschlauch keinerlei Werkzeuge, indem die Halbschalen des Verschleißrings nicht verschraubt, sondern lediglich auf den Schlauch aufgesetzt und miteinander verrastet werden.

In vorteilhafter Ausführung ist vorgesehen, dass jeweils eine Halbschale eines Rings mittels einer an wenigstens einer ihrer der anderen Halbschale dieses Rings zugewandten Stirnseite angeordneten Lasche in einer an der Stirnseite der anderen Halbschale dieses Rings angeordneten Ausnehmung verrastbar ist, wobei zum Lösen der Lasche aus der Ausnehmung insbesondere eine die Ausnehmung dieser Halbschale mit ihrem Außenumfang verbindende Bohrung vorgesehen ist. Derart ist zur Demontage der beiden Halbschalen des jeweiligen Rings lediglich ein im wesentlichen stiftförmiges Hilfsmittel erforderlich, welches in die am Außenumfang der Halbschalen angeordnete Bohrung eingeführt wird, um die Laschen aus ihrer Raststellung in der Ausnehmung zu lösen.

Vorzugsweise ist jede Halbschale eines Rings an ihrer einen der anderen Halbschale dieses Rings zugewandten Stirnseite mit der Lasche und an ihrer anderen der anderen Halbschale dieses Rings zugewandten Stirnseite mit der die Bohrung aufweisenden Ausnehmung ausgestattet, so dass beide Halbschalen identisch aufgebaut sind und die Herstellungskosten somit minimiert werden. Aus Gründen einer einfachen Zugänglichkeit beim Lösen der Halbschalen des jeweiligen Rings durch Einführen eines im wesentlichen stiftförmigen Hilfsmittels in die den Außenumfang der Halbschale mit der Ausnehmung verbindende Bohrung, um die Lasche außer Eingriff mit der Ausnehmung zu bringen, durchsetzt die Bohrung die Halbschale mit Vorzug im wesentlichen senkrecht zu der Ausnehmung.

Um ein Lösen der Halbschalen des erfindungsgemäßen Verschleißrings bei fortwährendem Abscheuern des Außenrings zuverlässig zu verhindern, sind vorzugsweise die Halbschalen des Innenrings miteinander verrastbar.

Sofern in diesem Fall die Halbschalen des Innenrings insbesondere mittels einer an wenigstens einer ihrer der anderen Halbschale des Innenrings zugewandten Stirnseite angeordneten Lasche in einer an der Stirnseite der anderen Halbschale angeordneten Ausnehmung mit einer die Ausnehmung mit dem Außenumfang der Halbschale verbindenden Bohrung verrastbar sind, so weisen die Halbschalen des Außenrings mit Vorzug eine mit der die Ausnehmung mit dem Außenumfang der Halbschalen des Innenrings verbindenden Bohrung fluchtende Radialbohrung auf. Auf diese Weise können die Halbschalen des Innenrings auf einfache Weise voneinander gelöst werden, ohne den Außenring vom Innenring abzunehmen, indem ein stiftförmiges Hilfsmittel durch die Radialbohrung des Außenrings in die Bohrung des Innenrings eingeführt wird, um die Lasche außer Eingriff mit der Ausnehmung zu bringen.

Zur Lösung der Erfindungsaufgabe ist bei einem Verschleißring der eingangs genannten Art ferner vorgesehen, dass die Halbschalen des Außenrings an den Halbschalen des Innenrings verrastbar sind.

Durch diese Ausgestaltung erfordert auch das Anbringen der Halbschalen des Innenrings an den Halbschalen des Außenrings keinerlei Werkzeuge, indem letzere auf einfache Weise durch Aufdrücken auf die Halbschalen des Innenrings mit diesen verrastet und somit formschlüssig an denselben festgelegt werden können.

Die Halbschalen des Außenrings sind hierbei bevorzugt mittels innenseitig angeordneter Rastnasen an außenseitig der Halbschalen des Innenrings angeordneten komplementären Rastvertiefungen festlegbar, so dass beim Aufdrücken der Halbschalen des Außenrings auf die Halbschalen des Innenrings die Rastnasen in den Rastvertiefungen zum Eingriff kommen, was insbesondere durch Hinterschneidungen der Rastvertiefungen gewährleistet sein kann, in welche die hierzu komplementären Rastnasen eingreifen. Alternativ oder zusätzlich können selbstverständlich auch die Halbschalen des Innenrings mittels außenseitig angeordneter Rastnasen an innenseitig der Halbschale des Außenrings angeordneten komplementären Rastvertiefung festlegbar sein.

Die Rastnasen bzw. Rastvertiefungen sind mit Vorzug jeweils im Bereich der Enden der Halbschalen angeordnet, wobei vorzugsweise im Bereich der Enden der Halbschalen jeweils zwei in Axialrichtung beabstandete Rastnasen beziehungsweise Rastvertiefungen in Umfangsrichtung hintereinander angeordnet sind. Derart sind die Halbschalen des Außenrings im Bereich der einander zugekehrten Enden sicher und zuverlässig an den Halbschalen des Innenrings fixiert.

Zum Lösen der Halbschalen des Außenrings von den Halbschalen des Innenrings ist bevorzugt an der Stirnseite der Halbschalen des Innenrings an der den Halbschalen des Außenrings zugewandten Seite ein Ausbruch angeordnet, welcher durch Einführen eines Hilfsmittels, z. B. eines Schraubenziehers, ein einfaches und schnelles Lösen der Halbschalen durch Ausbringen der Rastnasen aus den Rastvertiefungen gewährleistet. Alternativ oder zusätzlich kann zum selben Zweck selbstverständlich auch an den Stirnseiten der Halbschalen des Außenrings an der den Halbschalen des Innenrings zugewandten Seite ein Ausbruch vorgesehen sein.

In bevorzugter Ausführung ist vorgesehen, dass an der Außenseite der Halbschalen des Innenrings und an der Innenseite der Halbschalen des Außenrings komplementäre Zentriereinrichtungen angeordnet sind, die beispielsweise durch wenigstens einen an der Außenseite der Halbschalen des Innenrings in Umfangsrichtung angeordneten Umfangsvorsprung und wenigstens eine an der Innenseite der Halbschalen des Außenrings angeordnete Umfangsnut oder auch durch wenigstens eine an der Innenseite der Halbschalen des Außenrings in Umfangsrichtung angeordneten Umfangsvorsprung und wenigstens eine an der Außenseite der Halbschale des Innenrings angeordnete Umfangsnut ausgebildet sein können. Mit Vorzug sind hierbei zwei in Umfangsrichtung angeordnete Umfangsvorsprünge bzw. zwei hierzu komplementäre Umfangsnuten vorgesehen.

In Weiterbildung des erfindungsgemäßen Verschleißrings ist vorgesehen, dass an den einander zugekehrten Stirnseiten der Halbschalen wenigstens eines der Ringe Zentriermittel angeordnet sind, so dass die stirnseitig in Kontakt stehenden Halbschalen einwandfrei fluchten. Die Zentriermittel sind hierbei mit Vorzug an den Stirnseiten sowohl des Außen- als auch des Innenrings angeordnet.

Die Zentriermittel sind vorzugsweise in Form wenigstens eines an zumindest einer Stirnseite der Halbschale eines Rings angeordneten Vorsprungs und wenigstens einer an der dieser Stirnseite zugewandten Stirnseite der anderen Halbschale dieses Rings angeordneten komplementären Vertiefung gebildet, so dass der an der einen Stirnseite der Halbschale dieses Rings angeordnete Vorsprung jeweils in die an der dieser Stirnseite zugewandten Stirnseite der anderen Halbschale dieses Rings hierzu komplementäre Vertiefung eingreift. Um einen gleichen Aufbau der beiden Halbschalen des Innen- bzw. Außenrings zu gewährleisten, ist bevorzugt jede Halbschale des jeweiligen Rings vorzugsweise an ihrer einen der anderen Halbschale dieses Rings zugewandten Stirnseite mit wenigstens einem Vorsprung und an ihrer anderen der anderen Halbschale dieses Rings zugewandten Stirnseite mit wenigsten einer komplementären Vertiefung ausgestattet.

In weiterhin vorteilhafter Ausführung ist vorgesehen, dass die Halbschalen des Innenrings innenseitig in Umfangsrichtung umlaufende Rippen zum Festlegen an einem gerippten Kabelführungsschlauch aufweisen. Hierbei sind insbesondere wenigstens vier Rippen vorgesehen, so dass der Verschleißring auch zur Verbindung zweier Schlauchstücke des Kabelführungsschlauchs verwendet werden kann, die jeweils von wenigstens zwei der innenseitigen Rippen des Verschleißrings gehalten sind. Auf diese Weise ist ein Einsatz des erfindungsgemäßen Verschleißrings als Kupplungsmuffe für mehrere Schlauchstücke, beispielsweise beim Einsatz von Schlauchstücken unterschiedlicher Elastizität, möglich.

Vorteilhaft ist insbesondere eine Ausgestaltung der Rippen derart, dass zumindest einige Rippen von der Stirnseite der einen Halbschale des Innenrings vorstehen und die mit den vorstehenden Rippen der einen Halbschale fluchtenden Rippen der anderen Halbschale des Innenrings entsprechend ausgespart sind, so dass die Rippen neben der Befestigung an dem Kabelführungsschlauch zusätzlich zum Zentrieren der beiden Halbschalen des Innenrings dienen. Aus Gründen eines einheitlichen Aufbaus ist vorzugsweise jede Halbschale des Innenrings an ihrer einen der anderen Halbschale des Innenrings zugewandten Stirnseite mit wenigstens zwei vorstehenden Rippen ausgestattet, während dieselben Rippen an ihrer anderen Stirnseite entsprechend ausgespart sind.

Wie bereits angedeutet, bestehen sowohl der Innenring als auch der Außenring vorzugsweise aus Kunststoff, wobei der Innenring und der Außenring insbesondere aus verschiedenfarbigen Kunststoffen bestehen, so dass nach Abnutzung des Außenrings die Farbe des Innenrings erkennbar und derart ein erforderlicher Austausch des Verschleißrings angezeigt wird. Der Innenring wird hierbei zweckmäßig mit einer auffälligen Farbe versehen, z. B. einem Signalrot, Signalgelb oder dergleichen.

Die Erfindung betrifft auch einen Roboter, welcher mit einem Kabelführungsschlauch mit wenigstens einem Verschleißring der vorgenannten Art ausgestattet ist.

Nachfolgend ist die Erfindung anhand von Ausführungsbeispielen unter Bezugnahme auf die Zeichnungen näher erläutert. Es zeigen:
- Fig. 1: eine Seitenansicht eines Roboters;
- Fig. 2: eine Seitenansicht eines Kabelführungsschlauchs mit seinen wesentlichen Komponenten;
- Fig. 3: eine Detailansicht des Kabelführungsschlauchs gemäß Fig. 2;
- Fig. 4: eine Draufsicht auf einen Verschleißring in Explosionsdarstellung;
- Fig. 5: eine Frontansicht einer Halbschale des Innenrings des Verschleißrings gemäß Fig. 4;
- Fig. 6: eine Rückansicht einer Halbschale des Innenrings des Verschleißrings gemäß Fig. 4;
- Fig. 7: eine Frontansicht einer Halbschale des Außenrings des Verschleißrings gemäß Fig. 4;
- Fig. 8: eine Rückansicht einer Halbschale des Außenrings des Verschleißrings gemäß Fig. 4;
- Fig. 9: einen Querschnitt durch den Verschleißring gemäß Fig. 4 bis 8 im Bereich der Rastnasen und Rastvertiefungen und
- Fig. 10: einen Querschnitt durch den Verschleißring gemäß Fig. 4 bis 8 im Bereich der in die Ausnehmungen eingreifenden Laschen des Innenrings.

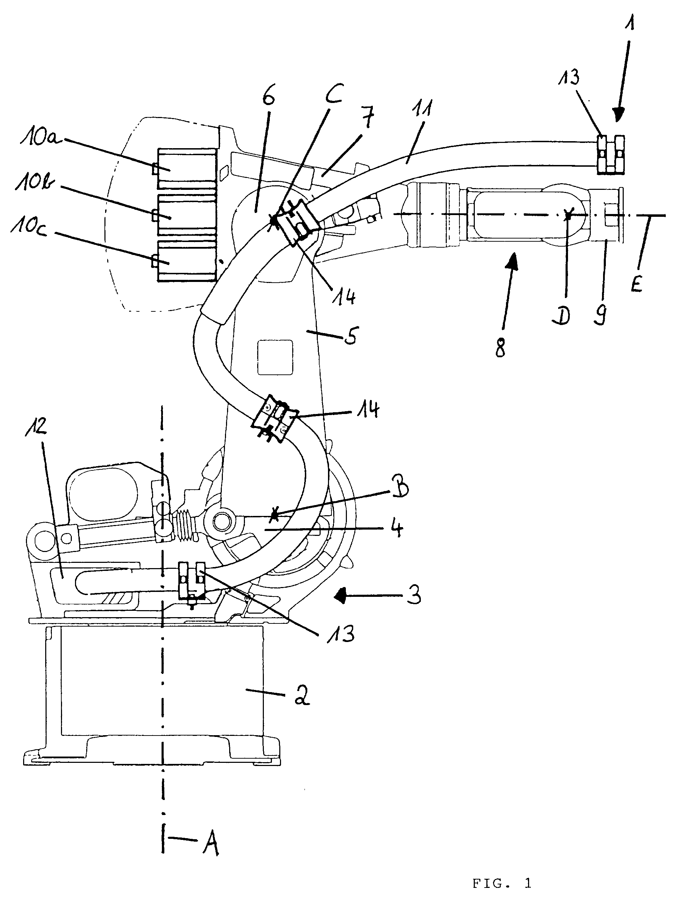

Der in Fig. 1 dargestellte Roboter weist einen z. B. fest mit dem Erdboden verbundenen Sockel 2 auf, auf dem eine um die vertikale A-Achse drehbare Roboterbasis 3, das "Karussell" angeordnet ist. Auf der Basis 3 ist um die horizontale B-Achse mittels eines Motors 4 schwenkbar eine Schwinge 5 aufgesetzt. An deren der Basis 3 abgewandten freien Ende ist mit ihr und um die ebenfalls horizontale C-Achse mittels eines Motors 6 verschwenkbar ein Roboterarm 7 angeordnet. Dieser trägt an seinem vorderen freien Ende 8 eine Roboterhand 9, die wiederum über wenigstens eine weitere horizontale D-Achse und eine hierzu senkrechte E-Achse verschwenkbar ist. Die Verschwenkung um die E-Achse kann von einem am rückwärtigen Ende des Roboterarms 7 angeordneten Antriebeselement erfolgen. Zusätzliche Bewegungen einer kompliziert ausgebildeten Roboterhand 9, wie einer Doppelwinkelhand oder eines Werkzeugs, können durch weitere am rückwärtigen Ende des Roboterarms 7 angeordnete Motoren 10a, 10b, 10c über sich durch den Roboterarm 7 erstreckende Antriebselemente bewirkt werden.

Sowohl die Motoren als auch Werkzeuge, wie beispielsweise Schweißwerkzeuge, sind von dem Sockel 2 her mit Energie versorgt. Dies kann innerhalb der verschiedenen Roboterteile oder aber an der Außenseite des Roboters 1 erfolgen, was in vielen Fällen vorteilhaft ist. Um die Kabel zur Energieversorgung der Motoren bzw. die Werkzeuge zu schützen, sind diese von einem Kabelführungsschlauch 11 umgeben, der entlang der Außenseite des Roboters 1 angeordnet und an diesem punktuell festgelegt ist. Die Befestigung des Kabelführungsschlauchs 11 an der Basis 3 erfolgt bei dem gezeigten Ausführungsbeispiel mittels eines Schottblechs 12, während zur weiteren Befestigung des Schlauchs 11 über seine Lange hin, z. B. an der Schwinge 5 bzw. an dem Roboterarm 7, Klemmschellen 13 und Schlauchhalter 14 vorgesehen sind. Letztere dienen zur Abstützung und Führung des Kabelführungsschlauchs 11 an einer oder mehreren Stellen an der Schwinge 5 und am Arm 7 des Roboters 1.

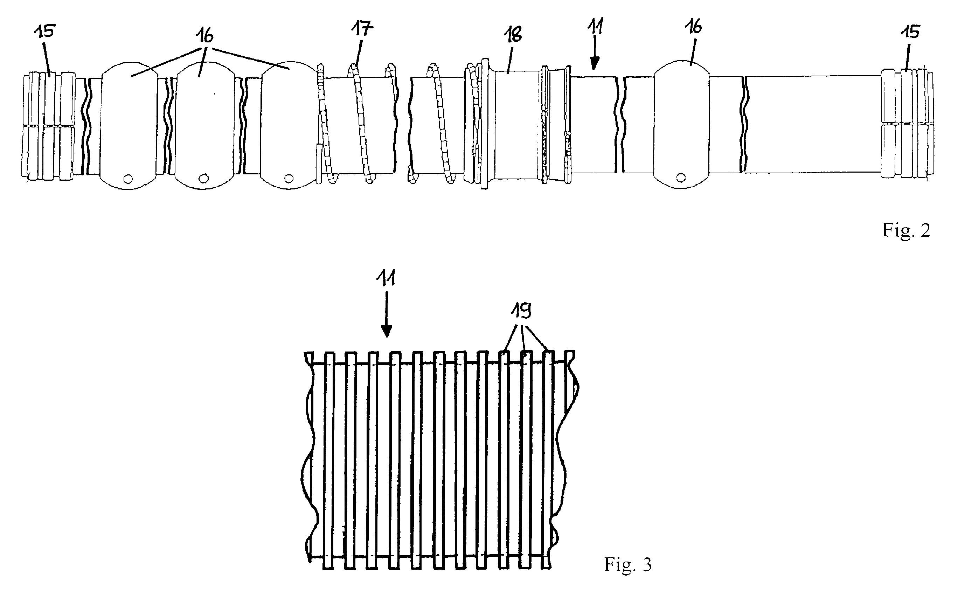

Wie aus Fig. 2 ersichtlich, ist der Kabelführungsschlauch 11 endseitig mit Endstücken 15 versehen. Er ist an seinen kritischen Stellen weiterhin mit Verschleißringen 16 ausgestattet, die ein direktes Scheuern und somit eine Beschädigung des Kabelführungsschlauchs 11 an bewegten Roboterteilen, wie an der Schwinge 5, dem Roboterarm 7 oder der Roboterhand 9 (Fig. 1), verhindern. Der Kabelführungsschlauch 11 kann ferner eine Druckfeder 17 aufweisen, die ihn bei Entlastung hinsichtlich der Roboterbewegungen in eine Ausgangsposition bringt. Als Widerlager für die Druckfeder 17 dient beispielsweise ein Federendhalter 18. Bei dem Kabelführungsschlauch 11 handelt es sich insbesondere um einen mit in Umfangrichtung angeordneten Rippen 19 versehenen Schlauch 11 (Fig. 3).

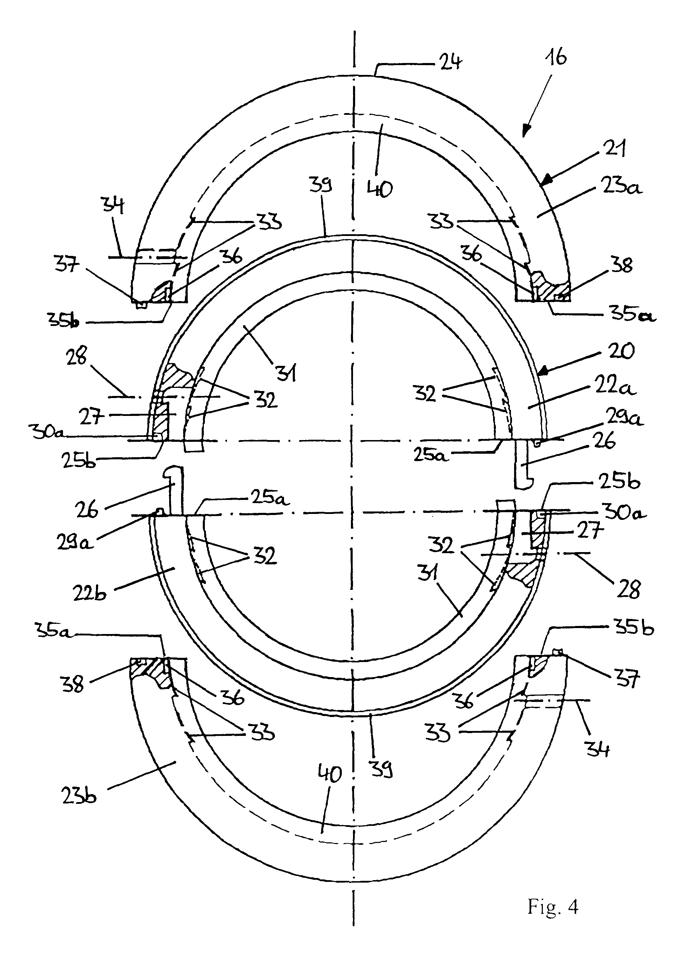

Fig. 4 zeigt eine Draufsicht auf den Verschleißring 16 in Explosionsdarstellung. Der Verschleißring 16 besteht aus einem Innenring 20 und einem Außenring 21, die wiederum jeweils zwei Halbschalen 22a, 22b; 23a, 23b aufweisen. Die axiale Außenkontur 24 des Verschleißrings 16 ist z. B. im wesentlichen teilkreisförmig. Der Innen- 20 und der Außenring 21 bestehen aus verschiedenfarbigen Kunststoffen, wobei die Farbe des Innenrings 20 derart gewählt ist, dass ein deutlicher Kontrast zu der Farbe des Außenrings 21 gegeben ist. So ist der Außenring 21 beispielsweise schwarz oder grau, während der Innenring 20 mit einem Signalrot versehen ist. Aus fertigungstechnischen Gründen sind die Halbschalen 22a, 22b des Innenrings und die Halbschalen 23a, 23b des Außenrings 21 jeweils identisch ausgebildet.

Zum einfachen und schnellen Festlegen der Halbschalen 22a, 22b des Innenrings 20 aneinander bzw. an einem Kabelführungsschlauch 11 (Fig. 2) weist jede Halbschale 22a, 22b an einer ihrer der anderen Halbschale 22b, 22a zugewandten Stirnseite 25a eine im wesentlichen hakenförmige Lasche 26 und an ihrer anderen der anderen Halbschale 22b, 22a zugewandten Stirnseite 25b eine Ausnehmung 27 auf, in der jeweils die Lasche 26 der anderen Halbschale 22b, 22a verrastbar ist. Zum Lösen der Lasche 26 ist an jeder Ausnehmung 27 eine diese mit dem Außenumfang der Halbschale 22a, 22b verbindende Bohrung 28 vorgesehen, welche die Halbschale 22a, 22b jeweils im wesentlichen senkrecht zu der Ausnehmung 27 bzw. zu der in dieser verrastbaren Lasche 26 durchsetzt. Die Bohrung 28 ist zweckmäßig im Bereich des hakenförmigen Endes der Lasche 26 in Rastposition angeordnet, um die Lasche 26 einfach und schnell mittels eines beliebigen in die Bohrung 28 einbringbaren, im wesentlichen stiftförmigen Hilfsmittel (nicht dargestellt) zu lösen und den Innenring 20 somit zu demontieren.

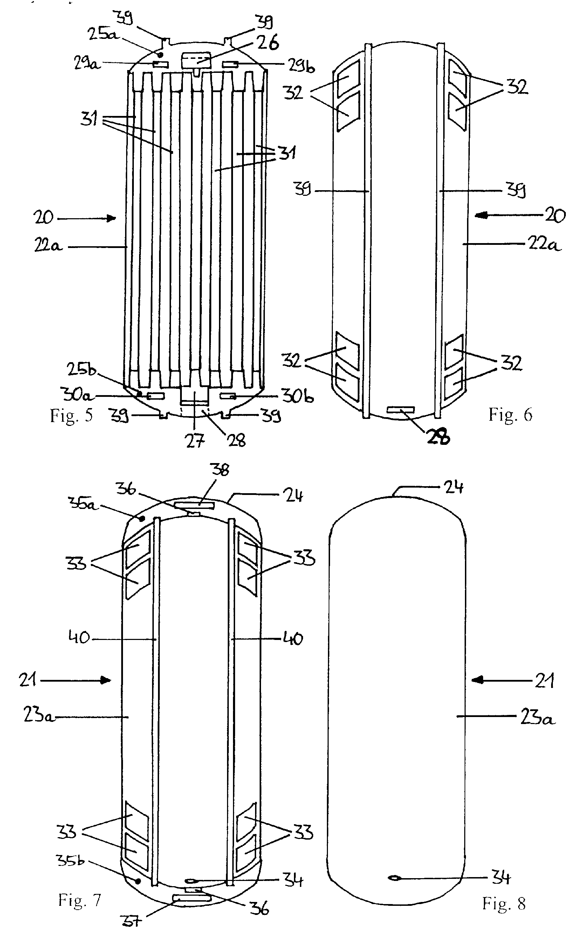

Wie insbesondere auch der Fig. 5 zu entnehmen ist, die eine Frontansicht der Halbschale 22a des Innenrings 20 zeigt, weist jede Halbschale 22a, 22b an ihren der anderen Halbschale 22b, 22a zugewandten Stirnseiten 25a, 25b Zentriermittel auf. In der gezeigten Ausführung sind die Zentriermittel von jeweils zwei an der Stirnseite 25a der Halbschalen 22a, 22b angeordneten Vorsprüngen 30a, 30b gebildet, die in jeweils zwei hierzu komplementäre Vertiefungen 31a, 31b an der anderen Stirnseite 25b der Halbschalen 22a, 22b eingreifen.

Weiterhin sind die Halbschalen 22a, 22b des Innenrings 20 innenseitig mit in Umfangsrichtung umlaufenden Rippen 31 ausgestattet, die in die Rippen 19 des Kabelführungsschlauchs 11 (Fig. 3) eingreifen, so dass der Verschleißring 16 an einer beliebigen Stelle des Kabelführungsschlauchs axialfest montierbar ist darüber hinaus als Kupplungsmuffe zweier Schlauchstücke einsetzbar ist. In der gezeigten Ausführung sind beispielsweise sieben Rippen 31 vorgesehen (Fig. 5). Ferner stehen zwei Rippen 31, z. B. die dritte und die fünfte Rippe 31, von der einen Stirnseite 25b der Halbschale 22a, 22b vor, während dieselben Rippen 31 an der anderen Stirnseite 25a der Halbschale 22a, 22b entsprechend ausgespart sind, um für eine einwandfreie Zentrierung der Halbschalen 22a, 22b zu sorgen (Fig. 4).

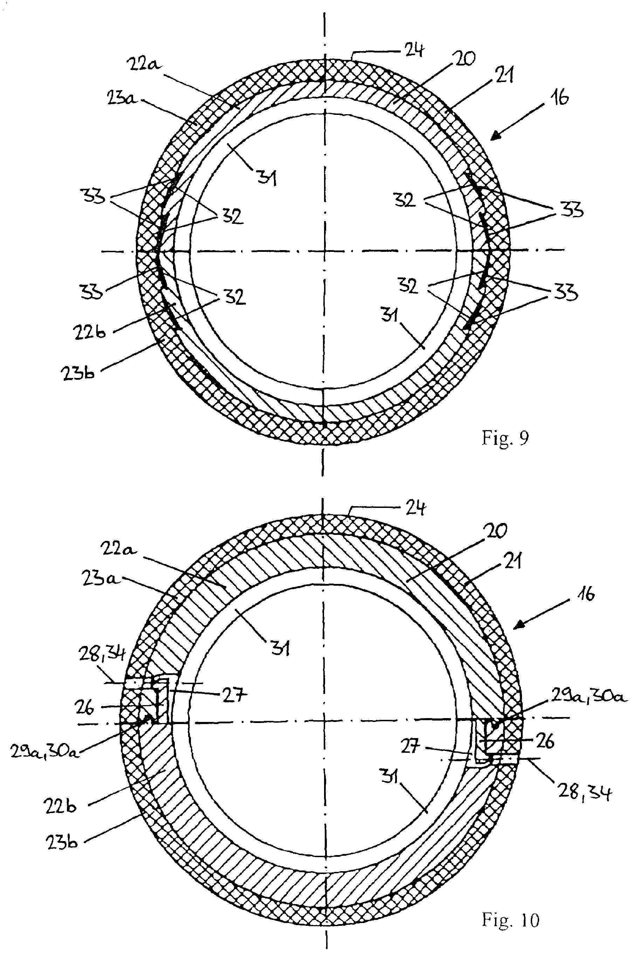

Zum Festlegen der Halbschalen 23a, 23b des Außenrings 21 an den Halbschalen 22a, 22b des Innenrings 20 sind letztere mit außenseitig angeordneten Rastvertiefungen 32 versehen (Fig. 4, 6), an denen hierzu komplementäre, innenseitig der Halbschalen 23a, 23b des Außenrings 21 angeordnete Rastnasen 33 (Fig. 4, 7) kraftschlüssig festlegbar sind. Dies wird bei dem dargestellten Ausführungsbeispiel durch Hinterschneidungen der Rastvertiefungen 32 gewährleistet, in welche die Rastnasen 33 eingreifen. Die Rastnasen 33 bzw. Rastvertiefungen 32 sind jeweils im Bereich der Enden der Halbschalen 22a, 22b; 23a, 23b angeordnet, wobei jeweils zwei in Axialrichtung beabstandete Rastnasen 33 bzw. Rastvertiefungen 32 in Umfangsrichtung hintereinander angeordnet sind, um den Außenring 21 sicher und zuverlässig an dem Innenring 20 festlegen zu können. Alternativ oder zusätzlich können die Rastnasen 33 selbstverständlich auch am Innenring 20 und die Rastvertiefungen 32 am Außenring 21 angeordnet sein.

Wie aus Fig. 4, 7 und 8 ersichtlich, sind die Halbschalen 23a, 23b des Außenrings 21 darüber hinaus jeweils mit einer Radialbohrung 34 versehen, die mit der die Ausnehmung 27 mit dem Außenumfang der Halbschalen 22a, 22b des Innenrings 20 verbindenden Bohrung 28 fluchten. Die Radialbohrungen 34 dienen zum Einbringen eines im wesentlichen stiftförmigen Hilfsmittels (nicht dargestellt) in die Bohrungen 28 des Innenrings 20 zum Lösen der Laschen 26 aus den Ausnehmungen 27, so dass die Halbschalen 22a, 22b des Innenrings 20 einfach und schnell voneinander trennbar sind, ohne die Halbschalen 23a, 23b des Außenrings 21 zuvor abzunehmen.

Zum Lösen der Halbschalen 23a, 23b des Außenrings 21 von den Halbschalen 22a, 22b des Innenrings 20 ist an jeder Stirnseite 35a, 35b der Halbschalen 23a, 23b des Außenrings 21 ein zentraler Ausbruch 36 angeordnet, der zum Einbringen eines Hilfsmittels, z. B. eines Schraubenziehers (nicht dargestellt) dient, um auf diese Weise die Rastnasen 33 außer Eingriff mit den Rastvertiefungen 32 zu bringen. Alternativ oder zusätzlich können entsprechende Ausbrüche selbstverständlich auch stirnseitig der Halbschalen 22a, 22b des Innenrings 20 vorgesehen sein (nicht gezeigt).

An den einander zugekehrten Stirnseiten 35a, 35b der Halbschalen 23a, 23b des Außenrings 21 sind ferner Zentriermittel angeordnet, die bei dem gezeigten Ausführungsbeispiel von jeweils einem zentralen Vorsprung 37 an der einen Stirnseite 35b und einer hierzu komplementären Vertiefung 38 an der anderen Stirnseite 35a gebildet sind.

Wie den Fig. 4, 6 und 7 zu entnehmen ist, sind an der Außenseite der Halbschalen 22a, 22b des Innenrings 20 und an der Innenseite der Halbschalen 23a, 23b des Außenrings 21 komplementäre Zentriereinrichtungen vorgesehen. Bei dem dargestellten Ausführungsbeispiel sind diese z. B. von zwei außenseitig der Halbschalen 22a, 22b des Innenrings 20 in Umfangsrichtung angeordneten Umfangsvorsprüngen 39 und zwei hierzu komplementären, innenseitig der Halbschalen 23a, 23b des Außenrings 21 in Umfangsrichtung angeordneten Umfangsnuten 40 gebildet. Alternativ sind beliebige andere, durch komplementäre Formen gebildete Zentriereinrichtungen denkbar.

Während in Fig. 9 nochmals ein Querschnitt durch den montierten Verschleißring 16 im Bereich der in Eingriff befindlichen Rastnasen 33 und Rastvertiefungen 32 dargestellt ist, zeigt Fig. 10 einen entsprechenden Querschnitt im Bereich der in den Ausnehmungen 27 verrasteten Laschen 26 des Innenrings 20.

Nachfolgend ist die Montage und Demontage des Verschleißrings 16 auf einem/von einem Kabelführungsschlauch 11 erläutert.

Die Halbschalen 22a, 22b des Innenrings 20 werden mit ihren innenseitigen Rippen 31 auf den Rippen 19 des Kabelführungsschlauchs 11 angeordnet und durch Andruck gegeneinander fixiert, wobei die Laschen 26 in den Ausnehmungen 27 verrasten. Zuvor oder anschließend werden die Halbschalen 23a, 23b des Außenrings 21 auf die Halbschalen 22a, 22b des Innenrings 20 aufgedrückt, wobei die Rastnasen 33 in den Rastvertiefungen 32 zum Eingriff kommen. Der Verschleißring 16 ist somit ohne Einsatz von Werkzeugen einfach und schnell montiert.

Zur Demontage des Verschleißrings 16 wird in die mit der Bohrung 28 im Innenring 20 fluchtende Radialbohrung 34 des Außenrings 21 ein beliebiger, im wesentlichen stiftförmiger Gegenstand eingebracht, um die Laschen 26 aus den Ausnehmungen 27 herausziehen und die Halbschalen 22a, 22b des Innenrings 20 gemeinsam mit den Halbschalen 23a, 23b des Außenrings 21 von dem Kabelführungsschlauch abnehmen zu können. Zum Trennen der Halbschalen 22a, 22b des Innenrings 20 von den Halbschalen 23a, 23b des Außenrings 21 wird sodann z. B. ein Schraubenzieher in die stirnseitigen Ausbrüche 36 des Außenrings 21 eingebracht, wobei die Rastnasen 33 aus den Rastvertiefungen 32 gelöst werden. Derart ist der Verschleißring auf entsprechend einfache Weise demontiert.

### Bezugszeichenliste

- 1: Roboter
- 2: Sockel
- 3: Basis
- 4: Motor
- 5: Schwinge
- 6: Motor
- 7: Roboterarm
- 8: freies Ende des Roboterarms
- 9: Roboterhand
- 10a-c: Motoren
- 11: Kabelführungsschlauch
- 12: Schottblech
- 13: Klemmschelle
- 14: Schlauchhalter
- 15: Endstück
- 16: Verschleißring
- 17: Druckfeder
- 18: Federendhalter
- 19: Rippen
- 20: Innenring
- 21: Außenring
- 22a, 22b: Halbschalen des Innenrings
- 23a, 23b: Halbschalen des Außenrings
- 24: Außenkontur
- 25a, 25b: Stirnseiten der Halbschalen des Innenrings
- 26: Lasche
- 27: Ausnehmung
- 28: Bohrung
- 29a, 29b: Vorsprünge
- 30a, 30b: Vertiefungen
- 31: Rippen
- 32: Rastvertiefungen
- 33: Rastnasen
- 34: Radialbohrung
- 35a, 35b: Stirnseiten der Halbschalen des Außenrings
- 36: Ausbruch
- 37: Vorsprung
- 38: Vertiefung
- 39: Umfangsvorsprung
- 40: Umfangsnut

## Patentansprüche

1. Verschleißring (16), insbesondere zum Schutz eines Kabelführungsschlauchs (11) an einem Roboter (1), mit einem jeweils zwei Halbschalen (22a, 22b; 23a, 23b) aufweisenden Innenring (20) und Außenring (21), **dadurch gekennzeichnet, dass** die Halbschalen (22a, 22b; 23a, 23b) wenigstens eines der Ringe (20, 21) miteinander verrastbar sind.

2. Verschleißring nach Anspruch 1, **dadurch gekennzeichnet, dass** jeweils eine Halbschale (22a, 22b) eines Rings (20, 21) mittels einer an wenigstens einer ihrer der anderen Halbschale (22b, 22a) dieses Rings (20, 21) zugewandten Stirnseite (25a, 25b) angeordneten Lasche (26) in einer an der Stirnseite (25b, 25a) der anderen Halbschale (22b, 22a) dieses Rings (21,22) angeordneten Ausnehmung (27) verrastbar ist.

3. Verschleißring nach Anspruch 2, **dadurch gekennzeichnet, dass** zum Lösen der Lasche (26) aus der Ausnehmung (27) eine die Ausnehmung (27) mit dem Außenumfang der Halbschale (22b, 22a) verbindende Bohrung (28) vorgesehen ist.

4. Verschleißring nach Anspruch 2 oder 3, **dadurch gekennzeichnet, dass** jede Halbschale (22a, 22b) eines Rings (20, 21) an ihrer einen der anderen Halbschale (22b, 22a) dieses Rings (20, 21) zugewandten Stirnseite (25a) mit der Lasche (26) und an ihrer anderen der anderen Halbschale (22b, 22a) dieses Rings (20, 21) zugewandten Stirnseite (25b) mit der die Bohrung (28) aufweisenden Ausnehmung (27) ausgestattet ist.

5. Verschleißring nach Anspruch 4 oder 5, **dadurch gekennzeichnet, dass** die Bohrung (28) die Halbschale (22a, 22b) im wesentlichen senkrecht zu der Ausnehmung (27) durchsetzt.

6. Verschleißring nach einem der Ansprüche 1 bis 5, **dadurch gekennzeichnet, dass** die Halbschalen (22a, 22b) des Innenrings (20) miteinander verrastbar sind.

7. Verschleißring nach einem der Ansprüche 1 bis 6, **dadurch gekennzeichnet, dass** die Halbschalen (23a, 23b) des Außenrings (21) eine mit der die Ausnehmung (27) mit dem Außenumfang der Halbschalen (22a, 22b) des Innenrings (20) verbindenden Bohrung (28) fluchtende Radialbohrung (34) aufweisen.

8. Verschleißring (16), insbesondere zum Schutz eines Kabelführungsschlauchs (11) an einem Roboter (1), mit einem jeweils zwei Halbschalen (22a, 22b; 23a, 23b) aufweisenden Innenring (20) und Außenring (21), insbesondere nach einem der Ansprüche 1 bis 7, **dadurch gekennzeichnet, dass** die Halbschalen (23a, 23b) des Außenrings (21) an den Halbschalen (22a, 22b) des Innenrings (20) verrastbar sind.

9. Verschleißring nach Anspruch 8, **dadurch gekennzeichnet, dass** die Halbschalen (23a, 23b) des Außenrings (21) mittels innenseitig angeordneter Rastnasen (33) an außenseitig der Halbschalen (22a, 22b) des Innenrings (20) angeordneten komplementären Rastvertiefungen (32) festlegbar sind.

10. Verschleißring nach Anspruch 8, **dadurch gekennzeichnet, dass** die Halbschalen (22a, 22b) des Innenrings (20) mittels außenseitig angeordneter Rastnasen an innenseitig der Halbschalen (21a, 21b) des Außenrings (21) angeordneten komplementären Rastvertiefungen festlegbar sind.

11. Verschleißring nach Anspruche 9 oder 10, **dadurch gekennzeichnet, dass** die Rastnasen (33) bzw. Rastvertiefungen (32) jeweils im Bereich der Enden der Halbschalen (22a, 22b; 23a, 23b) angeordnet sind.

12. Verschleißring nach einem der Ansprüche 9 bis 11, **dadurch gekennzeichnet, dass** im Bereich der Enden der Halbschalen (22a, 22b; 23a, 23b) jeweils zwei in Axialrichtung beabstandete Rastnasen (33) bzw. Rastvertiefungen (32) in Umfangsrichtung hintereinander angeordnet sind.

13. Verschleißring nach einem der Ansprüche 8 bis 12, **dadurch gekennzeichnet, dass** an den Stirnseiten (25a, 25b) der Halbschalen (22a, 22b) des Innenrings (20) an der den Halbschalen (23a, 23b) des Außenrings (21) zugewandten Seite ein Ausbruch zum Lösen der Halbschalen (23a, 23b) des Außenrings (21) von den Halbschalen (22a, 22b) des Innenrings (20) angeordnet ist.

14. Verschleißring nach einem der Ansprüche 8 bis 12, **dadurch gekennzeichnet, dass** an den Stirnseiten (35a, 35b) der Halbschalen (23a, 23b) des Außenrings (21) an der den Halbschalen (22a, 22b) des Innenrings (20) zugewandten Seite ein Ausbruch (36) zum Lösen der Halbschalen (23a, 23b) des Außenrings (21) von den Halbschalen (22a, 22b) des Innenrings (20) angeordnet ist.

15. Verschleißring nach einem der Ansprüche 8 bis 14, **dadurch gekennzeichnet, dass** an der Außenseite der Halbschalen (22a, 22b) des Innenring (20) und an der Innenseite der Halbschalen (23a, 23b) des Außenrings (21) komplementäre Zentriereinrichtungen angeordnet sind.

16. Verschleißring nach Anspruch 15, **dadurch gekennzeichnet, dass** die Zentriereinrichtungen durch wenigstens einen an der Außenseite der Halbschalen (22a, 22b) des Innenrings (20) in Umfangsrichtung angeordneten Umfangsvorsprung (39) und wenigstens eine an der Innenseite der Halbschalen (23a, 23b) des Außenrings (21) angeordnete Umfangsnut (40) ausgebildet sind.

17. Verschleißring nach Anspruch 15, **dadurch gekennzeichnet, dass** die Zentriereinrichtungen durch wenigstens einen an der Innenseite der Halbschalen (23a, 23b) des Außenrings (21) in Umfangsrichtung angeordneten Umfangsvorsprung und wenigstens eine an der Außenseite der Halbschalen (22a, 22b) des Innenrings (20) angeordnete Umfangsnut ausgebildet sind.

18. Verschleißring nach Anspruch 16 oder 17, **dadurch gekennzeichnet, dass** zwei in Umfangsrichtung angeordnete Umfangsvorsprünge (39) bzw. zwei hierzu komplementäre Umfangsnuten (40) vorgesehen sind.

19. Verschleißring nach einem der Ansprüche 1 bis 18, **dadurch gekennzeichnet, dass** an den einander zugekehrten Stirnseiten (25a, 25b; 35a, 35b) der Halbschalen (22a, 22b; 23a, 23b) wenigstens eines der Ringe (20, 21) Zentriermittel angeordnet sind.

20. Verschleißring nach Anspruch 19, **dadurch gekennzeichnet, dass** die Zentriermittel sowohl am Innenring (20) als auch am Außenring (21) angeordnet sind.

21. Verschleißring nach Anspruch 19 oder 20, **dadurch gekennzeichnet, dass** die Zentriermittel in Form wenigstens eines an zumindest einer Stirnseite (25a, 25b; 35b, 35a) der Halbschale (22a, 22b; 23a, 23b) eines Rings (20, 21) angeordneten Vorsprungs (29a, 29b; 37) und wenigstens einer an der dieser Stirnseite (25a, 25b; 35b, 35a) zugewandten Stirnseite (25b, 25a; 35a, 35b) der anderen Halbschale (22b, 22a; 23b, 23a) dieses Rings (20, 21) angeordneten komplementären Vertiefung (30a, 30b; 38) gebildet sind.

22. Verschleißring nach einem der Ansprüche 19 bis 21, **dadurch gekennzeichnet, dass** jede Halbschale (22a, 22b; 23b, 23a) eines Rings (20, 21) an ihrer einen der anderen Halbschale (22b, 22a; 23a, 23b) dieses Rings (20, 21) zugewandten Stirnseite (25a; 35b) mit wenigstens einem Vorsprung (29a, 29b; 37) und an ihrer anderen der anderen Halbschale (22b, 22a; 23a, 23b) dieses Rings (20, 21) zugewandten Stirnseite (25b; 35a) mit wenigstens einer komplementären Vertiefung (30a, 30b; 38) ausgestattet ist.

23. Verschleißring nach einem der Ansprüche 1 bis 22, **dadurch gekennzeichnet, dass** die Halbschalen (22a, 22b) des Innenrings (22) innenseitig in Umfangsrichtung umlaufende Rippen (31) zum Festlegen an einem gerippten Kabelführungsschlauch (11) aufweisen.

24. Verschleißring nach Anspruch 23, **dadurch gekennzeichnet, dass** zumindest einige Rippen (31) von der Stirnseite (25b) der einen Halbschale (22a, 22b) des Innenrings (20) vorstehen und die mit den vorstehenden Rippen (31) der einen Halbschale (22a, 22b) fluchtenden Rippen (31) der anderen Halbschale (22b, 22a) des Innenrings (20) entsprechend ausgespart sind.

25. Verschleißring nach Anspruch 24, **dadurch gekennzeichnet, dass** jede Halbschale (22a, 22b) des Innenrings (20) an ihrer einen der anderen Halbschale (22b, 22a) des Innenrings (20) zugewandten Stirnseite (25b) mit wenigstens zwei vorstehenden Rippen (31) ausgestattet ist, während dieselben Rippen (31) an ihrer anderen Stirnseite (25a) entsprechend ausgespart sind.

26. Verschleißring nach einem der Ansprüche 1 bis 25, **dadurch gekennzeichnet, dass** sowohl der Innenring (20) als auch der Außenring (21) aus Kunststoff besteht.

27. Verschleißring nach einem der Ansprüche 1 bis 26, **dadurch gekennzeichnet, dass** der Innenring (21) und der Außenring (21) aus verschiedenfarbigen Kunststoffen bestehen.

28. Roboter (1) mit einem Kabelführungsschlauch (11) mit wenigstens einem Verschleißring (16) gemäß einem der Ansprüche 1 bis 27.
